Europäisches Patentamt

European Patent Office

Office européen des brevets

(19)

(11) Veröffentlichungsnummer : **0 387 588 B1**

# (12) EUROPÄISCHE PATENTSCHRIFT

(45) Veröffentlichungstag der Patentschrift :
**21.07.93 Patentblatt 93/29**

(21) Anmeldenummer : **90103740.8**

(22) Anmeldetag : **26.02.90**

(51) Int. Cl.$^5$ : **C08J 9/16,** C08F 2/18,
C08F 257/02, C08J 9/14,
// (C08J9/16, C08L51:06),
(C08J9/16, C08L25:12),
(C08F257/02, 212:08)

(54) Expandierbare Styrolpolymerisate und Verfahren zu ihrer Herstellung.

(30) Priorität : **14.03.89 DE 3908238**

(43) Veröffentlichungstag der Anmeldung :
**19.09.90 Patentblatt 90/38**

(45) Bekanntmachung des Hinweises auf die
Patenterteilung :
**21.07.93 Patentblatt 93/29**

(84) Benannte Vertragsstaaten :
**AT BE DE ES FR GB IT NL**

(56) Entgegenhaltungen :
**DE-A- 1 494 934
FR-A- 1 368 544
US-A- 2 700 185
CHEMICAL ABSTRACTS, Band 90, Nr. 8, Februar 1979, Seite 40, Zusammenfassung Nr. 55835q, Columbus, Ohio, US**

(73) Patentinhaber : **BASF Aktiengesellschaft
Carl-Bosch-Strasse 38
W-6700 Ludwigshafen (DE)**

(72) Erfinder : **Hahn, Klaus, Dr.
Im Buegen 9
W-6719 Kirchheim (DE)**
Erfinder : **Guhr, Uwe, Dr.
Beim Hochgericht 9
W-6718 Gruenstadt (DE)**
Erfinder : **Hintz, Hans, Dr.
Wolframstrasse 4
W-6700 Ludwigshafen (DE)**

EP 0 387 588 B1

## Beschreibung

Schaumstoffe auf Basis von Styrol-Acrylnitril-Copolymeren haben wegen ihrer schrumpffreien Schaumstoffeigenschaften technische Bedeutung erlangt. Zu ihrer Herstellung wird ein Gemisch aus Styrol und Acrylnitril in wäßriger Suspension in Gegenwart eines Treibmittels polymerisiert. Das dabei resultierende expandierbare Copolymere läßt sich durch Erhitzen zu Schaumstoffperlen expandieren und durch Verschweißen zu beliebigen Schaumstoff-Formkörpern weiterverarbeiten.

Aus der DE-A-1 494 934 sind schwer entflammbare feinteilige expandierbare Kunststoffmassen auf Basis eines Styrolpolymerisats bekannt, wobei das Styrolpolymerisat ein Mischpolymerisat aus mindestens 80 Gewichtsprozent Styrol, 0,5 bis 5 Gewichtsprozent Acrylnitril und gegebenenfalls anderen monomeren polymerisierbaren ungesättigten Verbindungen ist. Daraus erhaltene Schaumkörper sollen nur wenig schrumpfen, außerdem sollen in den Schaumkörpern die Einzelteilchen gut verschweißt sein. Gemäß den Beispielen wurden die Mischpolymerisate durch Copolymerisation von monomerem Styrol und monomerem Acrylnitril hergestellt.

Wegen der hohen Toxizität des Acrylnitrils ist die Suspensionspolymerisation mit besonderen Gefahren verbunden. Probleme bereitet dabei auch die Entsorgung des Acrylnitril enthaltenden Abwassers. Der Erfindung liegt die Aufgabe zugrunde, schrumpffreie expandierbare Styrolpolymerisate nach einem ungefährlichen und umweltfreundlichen Verfahren herzustellen, bei dem keine giftigen Abwässer anfallen.

Überraschenderweise wurde gefunden, daß expandierbare Styrolpolymerisate auf Basis eines Gemisches aus Polystyrol und styrollöslichen Styrol-Acrylnitril-Copolymeren für die Herstellung von schrumpffreien Schaumstoffen geeignet sind und daß sich diese Produkte auf einfache und gefahrlose Weise durch Suspensionspolymerisation einer Lösung von Styrol-Acrylnitril-Copolymeren in Styrol herstellen lassen.

Für den Fachmann war es nicht vorhersehbar, daß derartige Produkte schrumpffrei sind, da Polystyrol, die Hauptkomponente, keine schrumpffreien Schaumstoffe liefert.

Gegenstand der Erfindung sind somit expandierbare Styrolpolymerisate enthaltend

a) 95 bis 99,5 Gew.-% Polystyrol,

b) 0,5 bis 5 Gew.-% eines styrollöslichen Styrol-Acrylnitril-Copolymeren, wobei der Gehalt an Acrylnitril mindestens 0,15 Gew.-%, bezogen auf die Summe von a) und b) beträgt,

c) 3 bis 10 Gew.-%, bezogen auf die Summe von a) und b), eines $C_3$-$C_6$-Kohlenwasserstoffs als Treibmittel, und gegebenenfalls

d) übliche Zusatzstoffe in wirksamen Mengen.

Als Hauptkomponente a) enthalten die Produkte Polystyrol in einer Menge von 95 bis 99,5 Gew.-%, vorzugsweise 95 bis 99 Gew.-%, bezogen auf die Summe von a) und b). Vorteilhaft enthält das Polystyrol eine geringe Menge eines Vernetzers einpolymerisiert, d.h. einer Verbindung mit mehr als einer, vorzugsweise zwei, polymerisierbaren Doppelbindungen, wie Divinylbenzol, Butadien oder Butandioldiacrylat. Der Vernetzer wird im allgemeinen in einer Menge von 0,005 bis 0,05 Mol-%, bezogen auf Styrol, verwendet.

Als weitere Komponente b) enthalten die Produkte ein styrollösliches Styrol-Acrylnitril-Copolymeres in einer Menge von 0,5 bis 5 Gew.-%, vorzugsweise 1 bis 5 Gew.-%, bezogen auf die Summe von a) und b). Die Copolymeren enthalten im allgemeinen einen Gehalt an einpolymerisiertem Acrylnitril von etwa 10 bis 35 Gew.-%, insbesondere 20 bis 30 Gew.-%. Bei zu hohem Acrylnitrilgehalt sind die Copolymeren nicht mehr löslich in Styrol.

Die Komponente b) wird hinsichtlich ihrer Menge und ihres Acrylnitrilgehalts so ausgewählt, daß der Gehalt an einpolymerisiertem Acrylnitril, bezogen auf die Summe von a) und b) mindestens 0,15 Gew.-%, im allgemeinen 0,15 bis 2 Gew.-%, vorzugsweise 0,5 bis 1,5 Gew.-%, beträgt. Das Copolymere weist im allgemeinen einem Schmelzindex MFI (g/10min) zwischen 0,5 und 2,5, vorzugweise zwischen 1,5 und 2,0 auf, gemessen nach DIN 53735. Die treibmittelfreie Mischung aus Polystyrol und dem Styrol-Acrylnitril-Copolymeren weist im allgemeinen einen Schmelzindex MFI (g/10 min) zwischen 1,0 und 2,2, vorzugsweise zwischen 1,5 und 2,0 auf, gemessen nach DIN 53735.

Als übliches Treibmittel enthalten die expandierbaren Styrolpolymerisate 3 bis 10 Gew.-%, vorzugsweise 5 bis 8 Gew.-%, bezogen auf die Summe von a) und b), eines $C_3$- bis $C_6$-Kohlenwasserstoffs, wie Propan, Butan, Isobutan, n-Pentan, i-Pentan, Neopentan und/oder Hexan. Vorzugsweise wird ein handelsübliches Pentan-Isomerengemisch verwendet.

Als weitere Zusatzstoffe können die Produkte übliche Farbstoffe, Füllstoffe, Stabilisatoren, Flammschutzmittel, Synergisten, Keimbildner, Gleitmittel und dergleichen in üblichen wirksamen Mengen enthalten.

Die expandierbaren Styrolpolymerisate liegen im allgemeinen in Form von Partikeln, d.h. in Perlform, Granulatform oder in Form von Brocken vor und haben vorteilhaft einen mittleren Durchmesser von 0,1 bis 6 mm, insbesondere 0,4 bis 3 mm. Die Herstellung kann beispielsweise durch Vermischen der Komponenten in der Schmelze in einem Extruder erfolgen, wobei der Strang nach dem Auspressen so rasch abgekühlt wird, daß kein Aufschäumen erfolgt und anschließend zerkleinert wird.

EP 0 387 588 B1

Vorteilhaft erfolgt die Herstellung durch Suspensionspolymerisation in an sich bekannter Weise. Dazu wird das Styrol-Acrylnitril-Copolymere, üblicherweise ein Handelsprodukt, in Styrol gelöst und diese Lösung in wäßriger Suspension polymerisiert. Vorteilhaft setzt man bei der Polymerisation eine geringe Menge, etwa 0,005 bis 0,05 Mol-%, bezogen auf Styrol, eines Vernetzers zu. Das Treibmittel kann dabei bei der Polymerisation mit vorgelegt werden oder im Laufe der Polymerisation zugefügt werden. Es kann auch erst nach beendeter Polymerisation dem Ansatz zugefügt werden.

Die erhaltenen perlförmigen expandierbaren Styrolpolymerisate werden danach von der wäßrigen Phase abgetrennt, gewaschen und getrocknet.

Die in den Beispielen genannten Teile sind Gewichtsteile.

Beispiel 1

In einem druckfesten Rührkessel wurde eine Mischung aus 200 Teilen Wasser, 0,1 Teil Natriumpyrophosphat, 100 Teilen einer Lösung von 0,01 Teil Divinylbenzol und 5 Teilen eines Styrol-Acrylnitril-Copolymeren (70/30 Gew.-%) mit einem Schmelzindex (g/10 min) von 1,9 in 95 Teilen Styrol, 7 Teilen Pentan, 0,15 Teilen tert.-Butylperoxid, 0,45 Teilen Benzoylperoxid, 0,7 Teilen Hexabromcyclododecan (Flammschutzmittel) und 4 Teilen einer 10 %igen wäßrigen Lösung von Polyvinylpyrrolidon unter Rühren auf 90°C erhitzt, 5 Stunden bei 90°C gehalten und anschließend 2 Stunden auf 100°C und weitere 2 Stunden auf 120°C erhitzt. Nach dem Abkühlen wurde das erhaltene Perlpolymerisat mit einem mittleren Teilchendurchmesser von ca 1 mm von der wäßrigen Phase abgetrennt, gewaschen und getrocknet.

Das erhaltene expandierbare Styrolpolymerisat wurde in einem handelsüblichen Rührvorschäumer, Typ Rauscher, mit strömendem Wasserdampf auf ein Schüttgewicht von 20 g/l vorgeschäumt. Nach 24 Stunden Zwischenlagerung wurden die Schaumstoffpartikel in einer Blockform, Typ Rauscher, durch Bedampfung mit Wasserdampf und einem Druck von 1,8 bar zu einem Block (100 x 100 x 30 cm) verschweißt.

Zur Prüfung des Schrumpfverhaltens wird die Wölbung der beiden Seitenflächen (100 x 100 cm²) der Schaumstoffblöcke nach innen, bezogen auf die Blockdicke, gemessen. Wölben sich beispielsweise beide Seitenflächen um zusammen 1,5 cm nach innen, so beträgt der Schrumpfungsgrad bei einer Blockdicke von 30 cm 5 %.

Die Ergebnisse sind in der Tabelle zusammengefaßt.

Beispiel 2

Es wurde wie in Beispiel 1 gearbeitet, jedoch 100 Teile einer Lösung von 0,01 Teilen Divinylbenzol und 4 Teilen des Styrol-Acrylnitril-Copolymeren in 96 Teilen Styrol verwendet.

Beispiel 3

Es wurde wie in Beispiel 1 gearbeitet, jedoch 100 Teile einer Lösung von 0,01 Teil Divinylbenzol und 3 Teilen des Styrol-Acrylnitril-Copolymeren in 97 Teilen Styrol verwendet.

Beispiel 4

Es wurde wie in Beispiel 1 gearbeitet, jedoch ohne Mitverwendung von Divinylbenzol.

Beispiel 5 (Vergleich)

Es wurde wie in Beispiel 1 gearbeitet, jedoch 100 Teile einer Lösung von 0,1 Teilen des Styrol-Acrylnitril-Copolymeren in 99,9 Teilen Styrol verwendet.

Beispiel 6 (Vergleich)

Es wurde wie in Beispiel 1 gearbeitet, jedoch 100 Teile einer Lösung von 0,01 Teilen Divinylbenzol in Styrol verwendet.

Beispiel 7 (Vergleich)

Es wurde wie in Beispiel 6 gearbeitet, jedoch ohne Mitverwendung von Divinylbenzol.

3

Tabelle

| Beispiel | a) Polystyrol Gew.-% | b) SAN-Copolymer Gew.-% | a+b AN-Gehalt Gew.-% | Schrumpfungsgrad [%] |
|---|---|---|---|---|
| 1 | 95 | 5 | 1,5 | 1,5 |
| 2 | 96 | 4 | 1,2 | 2,6 |
| 3 | 97 | 3 | 0,9 | 5,1 |
| 4 | 95 | 5 | 1,5 | 2,1 |
| 5 (Vergleich) | 99,9 | 0,1 | 0,03 | 10,5 |
| 6 (Vergleich) | 100 | 0 | 0 | 11,0 |
| 7 (Vergleich) | 100 | 0 | 0 | 11,2 |

## Patentansprüche

1. Expandierbare Styrolpolymerisate, enthaltend
   a) 95 bis 99,5 Gew.-% Polystyrol
   b) 0,5 bis 5 Gew.-% eines styrollöslichen Styrol-Acrylnitril-Copolymeren, wobei der Gehalt an Acrylnitril mindestens 0,15 Gew.-%, bezogen auf die Summe von a) und b) beträgt.
   c) 3 bis 10 Gew.-%, bezogen auf die Summe von a) und b), eines $C_3$-$C_6$-Kohlenwasserstoffs als Treibmittel, und gegebenenfalls
   d) übliche Zusatzstoffe in wirksamen Mengen.

**2.** Expandierbare Styrolpolymerisate nach Anspruch 1, dadurch gekennzeichnet, daß das Polystyrol unter Mitverwendung von 0,005 bis 0,05 Mol-%, bezogen auf Styrol, eines Vernetzers hergestellt worden ist.

**3.** Verfahren zur Herstellung expandierbarer Styrolpolymerisate gemäß Anspruch 1 bis 2, dadurch gekennzeichnet, daß man das Styrol-Acrylnitril-Copolymere in Styrol löst, in wäßriger Suspension polymerisiert und während oder nach der Polymerisation das Treibmittel zufügt.

**Claims**

**1.** An expandable styrene polymer containing
a) from 95 to 99.5% by weight of polystyrene,
b) from 0.5 to 5% by weight of a styrene-soluble styrene/acrylonitrile copolymer, the content of acrylonitrile being not less than 0.15% by weight, based on the sum of a) and b), and
c) from 3 to 10% by weight, based on the sum of a) and b), of a $C_3$-$C_6$-hydrocarbon as a blowing agent, with or without
d) conventional additives in effective amounts.

**2.** An expandable styrene polymer as claimed in claim 1, wherein the polystyrene has been prepared in the presence of from 0.005 to 0.05 mol%, based on styrene, of a crosslinking agent.

**3.** A process for the preparation of an expandable styrene polymer as claimed in claim 1 or 2, wherein the styrene/acrylonitrile copolymer is dissolved in styrene and polymerized in aqueous suspension, and the blowing agent is added during or after the polymerization.

**Revendications**

**1.** Polymères expansibles du styrène, contenant
a) 95 à 99,5 % en poids de polystyrène
b) 0,5 à 5 % en poids d'un copolymère styrène-acrylonitrile soluble dans le styrène, la teneur en acrylonitrile étant au moins 0,15 % du poids total de a) et b),
c) 3 à 10 %, du poids total de a) et b), d'un hydrocarbure en C3-C6 servant d'agent porogène, et le cas échéant,
d) des additifs usuels aux proportions efficaces.

**2.** Polymères expansibles du styrène selon la revendication 1, caractérisés en ce que la polystyrène a été préparé avec utilisation conjointe de 0,005 à 0,05 mol %, par rapport au styrène, d'un agent réticulant.

**3.** Procédé de préparation de polymères expansibles du styrène selon les revendications 1 et 2, caractérisé en ce que l'on dissout le copolymère styrène-acrylonitrile dans le styrène, on polymérise en suspension aqueuse et on ajoute l'agent porogène durant ou après la polymérisation.